# EUROPEAN PATENT SPECIFICATION

(11) **EP 0 414 680 B1**
(45) Date of publication and mention of the grant of the patent: **15.12.1993**
(21) Application number: 88903530.9
(22) Date of filing: 03.03.1988
(51) Int. Cl.: B29D 11/00, G02B 6/00

(54) **LIGHT COLLECTOR FOR STIMULABLE PHOSPHOR IMAGING APPARATUS**
LICHTSAMMLER FÜR ABBILDUNGSVORRICHTUNG MIT STIMULIERBAREM LEUCHTSTOFF
COLLECTEUR DE LUMIERE POUR APPAREIL D'IMAGERIE A PHOSPHORE STIMULABLE

(43) Date of publication of application: 06.03.1991
(73) Proprietor: EASTMAN KODAK COMPANY, Rochester, New York 14650-2201 (US)
(72) Inventor: OWEN, James, Frederick, Rochester, NY 14617 (US); KULPINSKI, Robert, Walter, Rochester, NY 14617 (US); GARBE, William, Frederick, Rochester, NY 14625 (US); BOUTET, John, Claude, Rochester, NY 14619 (US); LUBINSKY, Anthony, Richard, Webster, NY 14580 (US); KESSLER, David, Rochester, NY 14618 (US); WOO, Nea-Yea, Rochester, NY 14625 (US)
(74) Representative: Buff, Michel
(86) International application number: US8800759
(87) International publication number: WO8908020

(56) References cited:
- EP-A- 0 144 856
- WO-A-86/00209
- JP-A- 5 588 005
- US-A- 3 282 666
- US-A- 4 170 400
- US-A- 4 222 630
- US-A- 4 346 295
- US-A- 4 409 477
- US-A- 4 485 302
- US-A- 4 636 641

## Description

### Technical Field

This invention relates to light collectors for stimulable phosphor imaging apparatus and more particularly to such light collectors comprising a sheet transparent material.

### Description to the Prior Art

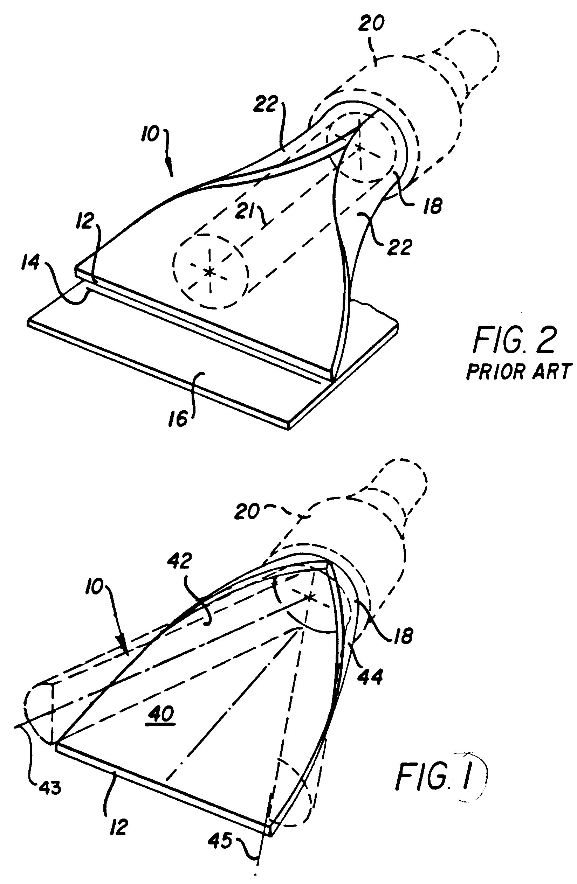

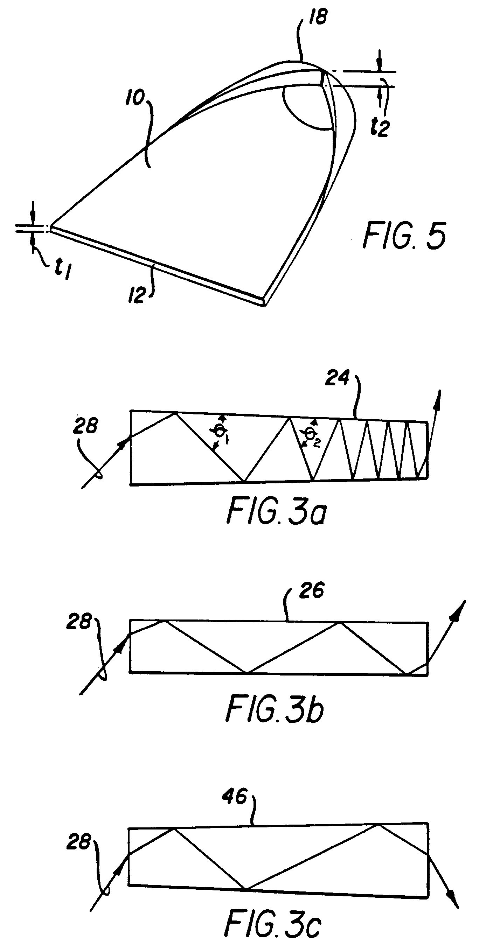

U. S. Patent No. 4,346,295 issued August 24, 1982 to Tanaka et al. discloses a stimulable phosphor radiation image readout apparatus having a light collector 10 as shown in Figure 2 comprising a transparent sheet having a linear end 12 arranged adjacent a scan line 14, on a stimulable phosphor sheet 16 and an annular end 18 arranged at the face of a light detector such as a photomultiplier tube 20. Emitted light entering the linear end of the light collector is directed by total internal reflection within the light collector to the light detector. The light collector is formed by heating a sheet of thermoplastic resin in an oven while holding one edge of the sheet in a fixture. After heating to a temperature where the thermoplastic is pliable, the other end of the sheet is formed by hand into a substantially cylindrical output end having a cylindrical axis 21 normal to the output face of the collector. The annular end is held in a collar (not shown) while cooling, then it is cut off, squared, ground, and polished. A problem arises when forming a light collector in this manner, for when the cylindrical output end is formed, the thermoplastic sheet undergoes some stretching and is thereby thinned in regions 22 near the output end. The thinning in the sheet has a deleterious effect on the light collection efficiency of the light collector. This effect is explained with reference to Figures 3 a, and b, where a cross-section of a tapered light collector 24 and a untapered light collector 26 are shown respectively. It is noted that each time a light ray 28 undergoes an internal reflection in the light collector, a small portion of the light is lost. In theory, the internal reflection is "total" if the surface of the collector is optically perfect; in practice this is difficult or impossible to achieve. Furthermore, there are also higher absorption losses due to a longer optical path through the transparent collector when the light experiences more reflections. Therefore, to maximize the light collection efficiency of the light collector it is desirable to minimize the number of internal reflections experienced by a light ray on its path to the detector.

Figure 3a shows a light ray 28 entering a tapered light collector 24. The tapered light collector is thicker at the entrance end and thinner at the exit end. As the light ray 28 progresses through the light collector, the angles of reflection ϑ₁,ϑ₂... from the surface of the light collector progressively increase due to the taper, thereby causing the light ray 28 to experience more and more reflections between the surfaces of the collector and consequently to traverse a longer path in the collector. Figure 3b shows a light collector 26 with no taper. It is readily seen by comparing figure 3a and figure 3b that the number of reflections of the light ray 28 in the non-tapered collector is less than in the tapered collector. It is the object of the present invention to provide a light collector of the type discussed above, having improved light collection efficiency.

### Disclosure of the Invention

The light collector according to the present invention is characterized by having a thickness that is increasing from the linear input edge to the annular output edge, thereby minimizing the number of internal reflections experienced by a ray of collected light in its path through the light collector. In a preferred mode of practicing the invention, the light collector is formed by heating a rectangular sheet of thermoplastic material and forming the sheet on a mould that comprises a triangular section, with two half circular cylinders arranged along two edges of the triangular section such that the surfaces of the half circular cylinders are tangent to the surface of the triangular section. When the sheet is formed on such a mould, there is no localized stretching of the sheet, and hence no thinning near the annular end of the sheet. According to an alternative mode of practicing the invention, a rectangular wedge shaped sheet of thermoplastic material is formed on the mould, with the thin end of the wedge shaped sheet arranged along the base of the triangle section of the mould and the thick end of the wedge forming the annular end of the collector. In a further mode of practicing the invention, a wedge shaped light collector is formed by injection moulding a thermoplastic material.

### Brief Description of the Drawings

Figure 1 is a perspective view of a light collector according to the present invention;
Figure 2 is a perspective view of a light collector according to the prior art;
Figure 3a-c are diagrams useful in describing the present invention;
Figure 4 is a schematic diagram showing steps of making the light collector of Figure 1;
Figure 5 is a perspective view of a further improved light collector according to the present invention prepared according to the steps illustrated in Figure 4;
Figure 6 shows histograms of the number of total internal reflections from light collectors according to the present invention;
Figure 7 a and b are top and side views respectively of a light collector according to the present invention prepared by injection moulding.

### Modes of Carrying out the Invention

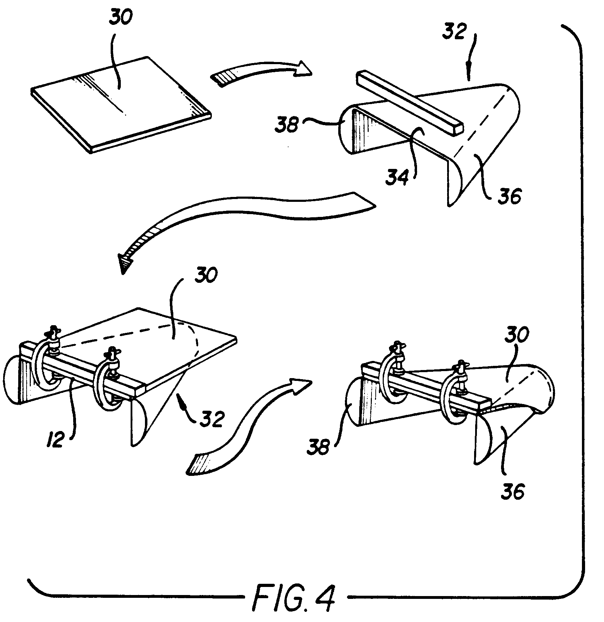

Referring to Figure 1, a light collector having improved light collection efficiency according to an embodiment of the present invention is shown. The light collector 10 is formed such that it is of increasing thickness from the input edge 12 to the output edge 18, thereby improving light collection efficiency by reducing the number of total internal reflections experienced by rays of light within the collector. To achieve the increasing thickness, the light collector shown in Figure 1 was formed as described with reference to Figure 4. A sheet of transparent thermoplastic material 30 was clamped in a mould 32 having a plane triangular section 34 with two one-half circular cylinders 36 and 38 arranged along two sides of the triangular section 34, such that the surfaces of the half cylinders were tangent to the surfaces of the triangular section. The mould 32 is constructed of optically polished stainless steel. One edge 12 of the sheet of transparent material which will become the input edge of the light collector is clamped along the base of the triangular section 34 of the mould. The assembly is heated in an oven until the thermoplastic sheet 30 is pliable, and the unclamped end of the sheet is formed around the half cylinders 36 and 38. The sheet is held around the cylinders until cooled when the mould 32 is removed.

The annular end of the sheet is then ground flat and polished as in the prior art. By thus forming the thermoplastic sheet around a mould having two half circular cylinders arranged along the edges of and tangent to a triangular section, the sheet is not stretched during forming, and therefore retains an increasing thickness throughout. The resulting light collector as shown in Figure 1 has a flat triangular section 40 and two cylindrical sections 42 and 44 having cylindrical axes 43 and 45 respectively that are parallel to the edges of the triangular section and intersect at the face of the detector 20.

In practice the light collector 10 is arranged in optical contact with the face of the PMT 20, and a filter (not shown) for absorbing stimulating radiation is located over the face of the PMT 20. Furthermore, as is known in the prior art, an elongated mirror (not shown) can be placed opposite to the light input edge 12 to increase collection efficiency, and as is disclosed in U.S. patent application Serial No. 048,152 filed May 11, 1987 by J. F. Owen et al. now US-A-4 775 791, the angle between the light collecting edge 12 and the perpendicular to the surface of the phosphor sheet can be arranged to be between 10^{o} and 15^{o} to optimize light collection and minimize flare.

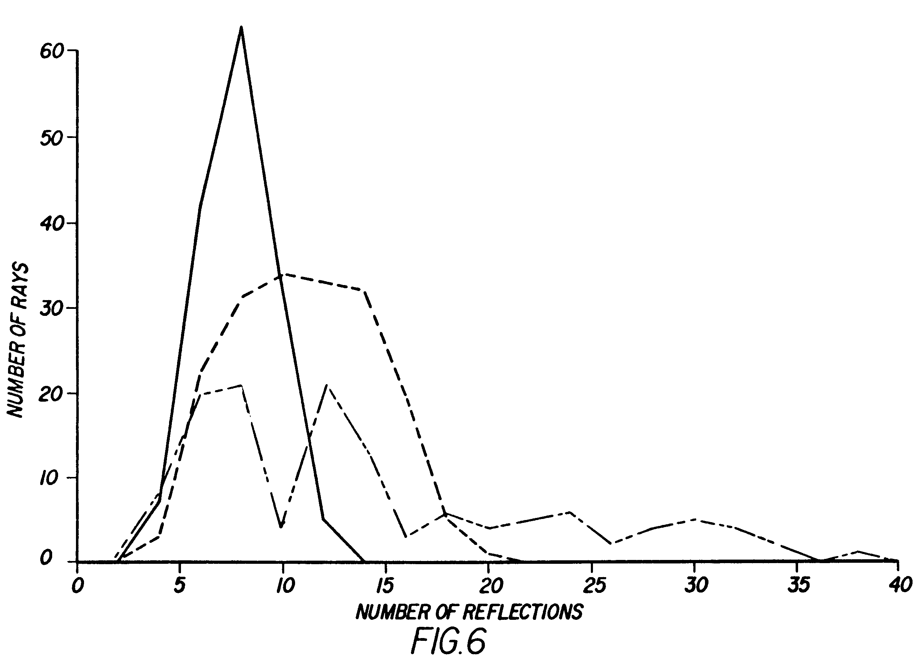

According to the present invention, the light collector is tapered in thickness from the input edge to the output edge, with the thicker edge being the output edge. Figure 3c shows the effect on a ray 28 proceeding through a light collector 46 that is thicker at the output edge than the input edge. As can be seen by comparing Figure 3c with Figure 3b, the ray 28 in Figure 3c experiences fewer internal reflections on its path through the light collector. A light collector according to the present invention wherein the thickness of the light collector increases from the input end to the exit end of the light collector can be constructed as shown in Figure 4, starting with a wedge shaped sheet of thermoplastic material. The thin edge of the sheet is clamped in the mould and the thick end is wrapped around the one-half cylinders after heating. The resulting light collector is shown in Figure 5. As shown in Figure 5, the thickness t₁ of the input edge 12 is less than the thickness t₂ of the output edge 18. To evaluate the effect of increasing the thickness of the light collector from input edge to output edge, a computer model of the light collector shown in Figure 5 was generated, and hundreds of rays were traced through the model. Figure 6 is a histogram generated from the ray tracing experiment, which shows the relative number of rays experiencing different numbers of reflections in passing through a uniformly thick light collector and tapered light collectors according to the present invention. The chain line in Figure 6 is the histogram for a uniformly thick light collector that is 0.6 cm thick. The dashed line is the histogram for a tapered light collector that is 0.6 cm thick at the entrance edge and 1.3 cm thick at the exit edge. The solid is the histogram for a light collector that is 0.6 cm thick at the entrance edge and 2.5 cm thick at the exit edge. It can be seen from Figure 6 that the greater the taper in thickness, the fewer reflections the average ray experiences in passing through the collector and hence the greater the light collection efficiency.

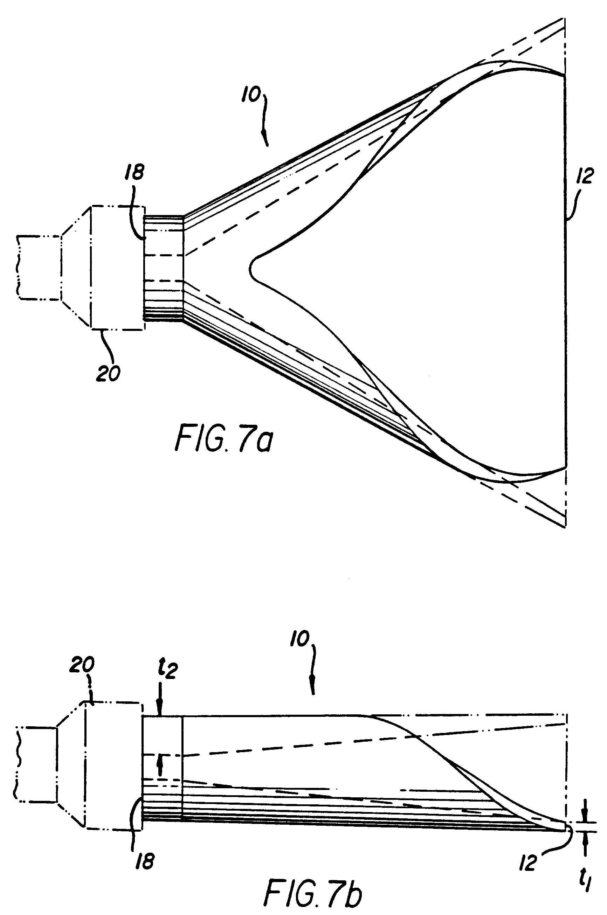

As the thickness taper is increased, it becomes increasingly difficult to form the light collector from a wedge shaped sheet according to the method shown in Figure 4. To achieve the maximum light collection efficiency benefit a tapered collector as shown in Figures 7a and b was designed for injection moulding using the injection moulding process employed to form canopies for jet aircraft. The light collector 10 shown in top view in Figure 7a and side view in Figure 7b has an entrance edge 12, 41 cm long by 1 cm thick (t₁). The light collector tapers to a thickness of 2.54 cm (t₂) at the exit end 18. The sides of the injection moulded light collector are not perfect half circular cylinders, but closely approximate the half circular sides of the light collector shown in Figures 1 and 5. The light collectors according to the present invention can also be made by casting plastic resin, or by moulding or forming glass or quartz.

### Industrial Applicability

The light collectors of the present invention are useful in stimulable phosphor imaging apparatus, and have the advantage of achieving higher light collection efficiency over the light collectors of the prior art.

## Claims

1. A light collector (10) for stimulable phosphor imaging apparatus, comprising a sheet of transparent material (30) having a linear input edge (12) for receiving light emitted from a storage phosphor material (16) along a scan line (14), and an opposite output edge (18) formed into an annular shape for delivering collected light to a photodetector (20) by total internal reflection, characterized by: the sheet of transparent material (30) being of increasing thickness from the linear edge (12) to the annular output edge (18), such that the number of total internal reflections is reduced, thereby increasing the light collection efficiency of the light collector.

2. The light collector claimed in Claim 1, wherein the sheet of transparent material (30) comprises a triangular section (40, one side of the triangle being the input edge (12) of the light collector (10), and a pair of one-half circular cylindrical sections (42,44) adjacent the other two sides of the triangular section (40), the surfaces of the cylindrical sections (42,44) being tangent to the surfaces of the triangular section.

3. The light collector (10) claimed in Claim 2, wherein the triangular section (40) and the cylindrical sections (42,44) are of constantly increasing thickness from the light input edge (12) to the annular output edge (18).

4. A method of forming a light collector (10) for stimulable phosphor imaging apparatus, including the steps of clamping one edge (12) of a sheet of thermoplastic material (30), heating the thermoplastic material (30) until it is pliable, and forming an opposite edge (18) of the sheet (30) into an annular form, characterized by: forming the light collector (10) from a sheet of thermo plastic material (30) having increasing thickness from one edge (12) to an opposite edge (18) on a mould comprising a triangular section (34), with a pair of one-half circular cylinders (36,38) along first and second sides of the triangular section (34), the surfaces of the one-half circular cylinders (36,38) being tangent to the surface of the triangular section (34), the sheet of thermoplastic material (30) being clamped with the one edge (12) aligned with the third side of the triangular section, and being formed around the half-cylindrical side sections (36,38) of the mould, such that there is no stretching deformation of the thermoplastic sheet (30), and hence no thinning of the thermoplastic sheet (30) whereby the light collector (10) thus formed is of increasing thickness from said one edge (12) to said opposite edge (18).

## Patentansprüche

1. Kollektor (10) für eine Bilderzeugungsvorrichtung mit einer durch Strahlung anregbaren Phosphorfolie, wobei der Kollektor eine Folie aus transparentem Material (30) aufweist, die eine lineare Eintrittskante (12) für das von einem Phosphorspeichermaterial längs einer Abtastseile (14) abgegebene Licht sowie eine dieser gegenüberliegende Austrittskante (18) aufweist, die ringförmig gebogen ist und durch totale Innenreflexion das aufgefangene Licht einem Photodetektor (20) übermittelt, **dadurch gekennzeichnet**, daß die Dicke der Folie aus transparentem Material (30) von der linearen Eintrittskante (12) zu der ringförmigen Austrittskante (18) hin derart zunimmt, daß sich die Anzahl der totalen Innenreflexionen verringert und die Lichtkollektorleistung des Kollektors steigt.

2. Kollektor nach Anspruch 1, dadurch gekennzeichnet, daß die Folie aus transparentem Material (30) einen dreieckigen Abschnitt (40) aufweist, dessen eine Seite die Eintrittskante (12) des Kollektors (10) bildet, und daß den beiden anderen Seiten des dreieckigen Abschnitts (40) benachbart zwei halbrunde zylindrische Abschnitte (42, 44) vorgesehen sind, deren Flächen tangential zu den Flächen des dreieckigen Abschnitts verlaufen.

3. Kollektor (10) nach Anspruch 2, dadurch gekennzeichnet, daß die Dicke des dreieckigen Abschnitts (40) und der zylindrischen Abschnitte (42, 44) von der Lichteintrittskante (12) zur ringförmigen Austrittskante (18) hin konstant zunimmt.

4. Verfahren zur Herstellung eines Kollektors (10) für eine Bilderzeugungsvorrichtung mit einer durch Strahlung anregbaren Phosphorfolie, bei dem eine Kante (12) einer Folie aus thermoplastischem Material (30) festgeklemmt und das thermoplastische Material (30) so lange erhitzt wird, bis es biegsam ist, und bei dem eine dieser Kante gegenüberliegende Kante (18) der Folie (30) ringförmig gebogen wird, dadurch gekennzeichnet, daß der Kollektor (10) aus einer Folie aus thermoplastischem Material (30), deren Dicke von der einen Kante (12) zur gegenüberliegenden Kante (18) hin zunimmt, mit Hilfe einer Form gebogen wird, die einen dreieckigen Abschnitt (34) aufweist, an dessen erster und zweiter Seite zwei halbkreisförmige Zylinderabschnitte (36, 38) vorgesehen sind, deren Flächen tangential zur Fläche des dreieckigen Abschnitts (34) verlaufen, daß die Folie aus thermoplastischem Material (30) an der mit der dritten Seite des dreieckigen Abschnitts ausgerichteten Kante (12) festgeklemmt wird und um die halbzylindrischen Seitenabschnitte (36, 38) der Form so herumgebogen wird, daß sie nicht durch Dehnung verformt und dadurch dünner wird, und daß der so erhaltene Kollektor (10) eine von der Lichteintrittskante (12) zur gegenüberliegenden Lichtaustrittskante (18) hin zunehmende Dicke aufweist.

## Revendications

1. Collecteur de lumière (10) pour un appareil d'imagerie à substance fluorescente stimulable, comprenant une feuille de matériau transparent (30) ayant un bord d'entrée linéaire (12) pour recevoir la lumière émise par un matériau comprenant une substance fluorescente d'enregistrement (16) le long d'une ligne de balayage (14), et un bord de sortie opposé (18) en forme d'anneau pour restituer la lumière collectée à un photodétecteur (20) après réflexions internes totales, caractérisé en ce que l'épaisseur de la feuille de matériau transparent (30) augmente du bord linéaire (12) au bord de sortie en forme d'anneau (18) de sorte que le nombre de réflexions internes totales soit réduit, ce qui augmente l'efficacité du collecteur de lumière pour collecter la lumière.

2. Collecteur de lumière selon la revendication 1, dans lequel la feuille de matériau transparent (30) comprend une section triangulaire (40), un des côtés du triangle formant le bord d'entrée (12) du collecteur de lumière (10), et une paire de demi-sections circulaires cylindriques (42, 44) adjacentes aux deux autres côtés de la section triangulaire (40), les surfaces des sections cylindriques (42, 44) étant tangentes aux surfaces de la section triangulaire.

3. Collecteur de lumière (10) selon la revendication 2, dans lequel la section triangulaire (40) et les sections cylindriques (42, 44) ont une épaisseur qui augmente de façon constante entre le bord d'entrée de la lumière (12) et le bord de sortie en forme d'anneau (18).

4. Procédé pour former un collecteur de lumière (10) pour un appareil d'imagerie à substance fluorescente stimulable, comprenant la fixation d'un bord (12) d'une feuille de matériau thermoplastique (30), le chauffage du matériau thermoplastique (30) pour le rendre maléable, et la mise en forme du bord opposé (18) de la feuille en forme d'anneau caractérisé en ce que le collecteur de lumière (10) est formé à partir d'une feuille de matériau thermoplastique (30) ayant une épaisseur augmentant du bord (12) au bord opposé (18), sur un moule comprenant une section triangulaire (34), et une paire de demi-cylindres circulaires (36, 38) le long du premier et du second côté de la section triangulaire (34), les surfaces des demi-cylindres circulaires (36, 38) étant tangentes à la surface de la section triangulaire (34), la feuille de matériau thermoplastique (30) étant fixée avec le bord (12) aligné avec le troisième côté de la section triangulaire, et mis en forme autour des demi-sections des côtés cylindriques (36, 38) du moule, de sorte qu'il n'y ait pas d'étirement de la feuille thermoplastique (30), et donc pas d'amincissement de la feuille thermoplastique (30) au moyen de laquelle le collecteur de lumière (10) ainsi formé a une épaisseur qui augmente du bord (12) au bord opposé (18).
